# DEMANDE DE BREVET EUROPEEN

(11) **EP 0 576 382 A1**
(43) Date de publication de la demande: **29.12.1993**
(21) Numéro de dépôt: 93460022.2
(22) Date de dépôt: 15.06.1993
(51) Int. Cl.: H04B 14/00, H04B 1/66, H04L 27/10

(54) **Procédé de transmission de signaux électriques par voie hertzienne, et systèmes de transmission pour la mise en oeuvre de ce procédé**

(30) Priorité: 24.06.1992 FR 9207997
(71) Demandeur: CENTRE REGIONAL D'INNOVATION ET DE TRANSFERT DE TECHNOLOGIE EN ELECTRONIQUE ET COMMUNICATIONS DE BRETAGNE LOI 1901 (CRITT), F-22304 Lannion Cédex (FR)
(72) Inventeur: Dupuis, Philippe, F-22700 Perros-Guirec (FR); Verdot, Georges, F-22300 Lannion (FR)
(74) Mandataire: Le Guen, Louis François

(57) **Abrégé**

La présente invention concerne un procédé de transmission de signaux électriques, lesdits signaux ayant une forme d'onde carrée. Il consiste à:
1) à l'émission,
   a) transformer lesdits signaux de forme d'onde carrée en signaux en dents de scie,
   b) moduler en fréquence, par lesdits signaux en dents de scie, une porteuse,
   c) émettre par voie hertzienne lesdits signaux modulés en fréquence, et
2) à la réception,
   a) mélanger les signaux reçus à une onde de sensiblement même fréquence que la porteuse d'émission
   b) détecter, parmi lesdits signaux dans ladite bande de réception, ceux dont la fréquence se trouve à l'intérieur d'une bande.

L'invention concerne également des systèmes de transmission pour la mise en oeuvre de ce procédé.

## Description

La présente invention concerne un procédé de transmission de signaux électriques par voie hertzienne et des systèmes de transmission pour la mise en oeuvre de ce procédé. Ce procédé et ces systèmes sont notamment conçus pour la transmission micro-ondes de signaux numériques mais, comme le fera apparaître la description, l'invention ne se limite pas à cette application particulière.

La transmission micro-ondes de signaux numériques peut être bien adaptée pour de nombreuses applications telles que la télécommande, la télésurveillance, la domotique, les réseaux locaux, etc.

Néanmoins, son développement a été retardé du fait du coût des équipements. En effet, ceux-ci utilisent des techniques de type hétérodyne nécessitant, pour l'accord entre les émetteurs et les récepteurs, des oscillateurs d'émission et de réception stables, à faible bruit et munis de protections contre les fréquences images.

Le but de l'invention est donc de proposer un procédé de transmission qui ne nécessite pas, pour sa mise en oeuvre, d'équipements coûteux et qui est cependant protégé contre les dérives des oscillateurs de l'émetteur et du récepteur.

Un autre but de l'invention est de prévoir un procédé de transmission qui n'impose pas de filtrage pour réjecter la fréquence de l'oscillateur local de réception.

Un autre but de l'invention est de proposer un procédé dont le rendement de transmission n'est pas inférieur de plus d'une vingtaine de dB à celui d'une liaison de bonne qualité avec réception hétérodyne.

Pour ce faire, un procédé de transmission de signaux électriques selon l'invention est remarquable en ce qu'il consiste à:
1) à l'émission,
   a) transformer lesdits signaux dont l'onde présente une forme carrée en signaux en dents de scie d'amplitude constante et de même fréquence que lesdits signaux de forme d'onde carrée,
   b) moduler en fréquence, par lesdits signaux en dents de scie, une porteuse, dite porteuse d'émission,
   c) émettre par voie hertzienne lesdits signaux modulés en fréquence, et
2) à la réception,
   a) mélanger les signaux reçus à une onde de sensiblement même fréquence que la porteuse d'émission afin d'obtenir des signaux modulés en fréquence compris dans une bande de fréquences de réception,
   b) détecter, parmi lesdits signaux dans ladite bande de réception, ceux dont la fréquence se trouve à l'intérieur d'une bande, dit de filtrage, de largeur deux fois plus faible que ladite bande de réception et centrée sur ladite bande de réception, afin de produire un signal de détection à un premier niveau lors de ladite détection et à un second niveau en l'absence de détection afin de fournir des signaux reconstitués de forme d'onde carrée.

Selon une autre caractéristique de l'invention, à l'émission, l'excursion en fréquence de la modulation en fréquence de la porteuse d'émission est égale à 4F₀ et en ce qu'à la réception, la bande de filtrage est comprise entre une fréquence basse F₀ et une fréquence haute 3F₀, F₀ étant une fréquence caractéristique du procédé de transmission.

Selon une autre caractéristique de l'invention, on mélange les signaux reçus à une onde dont la fréquence varie lentement autour d'une fréquence sensiblement égale à celle de la porteuse d'émission.

L'invention concerne également un procédé de transmission de signaux d'informations remarquable en ce qu'il consiste à:
a) moduler en fréquence une porteuse à partir desdits signaux d'informations afin de fournir des signaux de forme d'onde carrée dont la fréquence est en relation avec les informations portées par lesdits signaux,
b) appliquer auxdits signaux de forme d'onde carrée ainsi générés, un procédé de transmission de signaux de forme d'onde carrée selon l'invention,
c) démoduler les signaux reconstitués à l'étape de réception dudit procédé afin de recouvrir lesdits signaux d'informations.

Selon une autre caractéristique de l'invention, lesdits signaux d'informations sont des signaux numériques et la modulation de la porteuse de codage est du type à déplacement de fréquence FSK afin de produire des signaux de modulation à une première fréquence pour les bits à zéro et à une seconde fréquence pour les bits à un desdits signaux numériques, le décodage consistant en une démodulation en FSK inverse.

L'invention concerne également des systèmes de transmission par voie hertzienne de signaux électriques pour la mise en oeuvre d'un procédé selon l'invention.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 est un schéma synoptique d'un système de transmission qui fonctionne selon le procédé de l'invention,
la Fig. 2 représente, en fonction du temps, des signaux présents dans l'émetteur d'un système selon l'invention,
la Fig. 3 représente, en fonction du temps, des signaux présents dans le récepteur d'un système selon l'invention, et
les Fig. 4a et 4b sont des courbes fonction du temps de signaux présents dans le récepteur d'un système selon l'invention.
la Fig. 5 est un schéma synoptique d'un système de transmission de signaux numériques selon l'invention, et
la Fig. 6 est un schéma synoptique d'un système de barrière à ondes hertziennes.

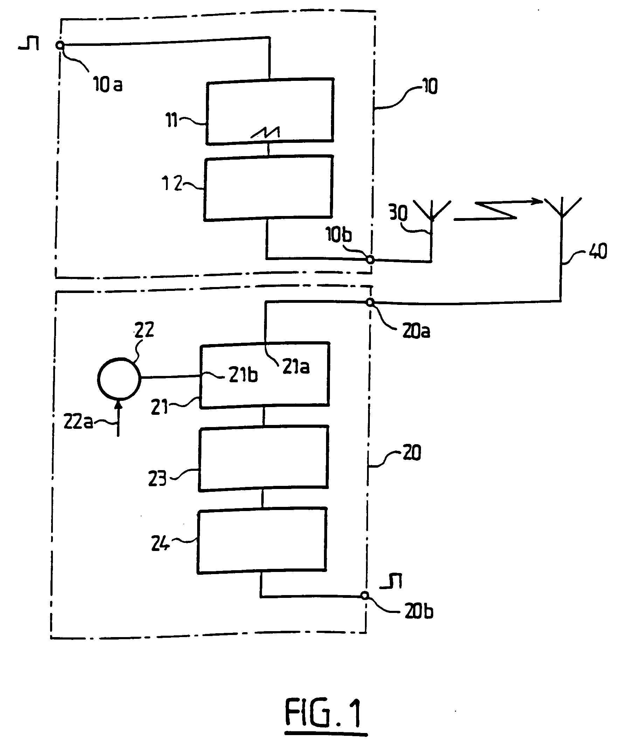

Le système de transmission représenté à la Fig. 1 est constitué d'un émetteur 10 et d'un récepteur 20.

L'émetteur 10 comporte une entrée 10a qui est destinée à recevoir des signaux de forme d'onde carrée et une sortie 10b pour son raccordement à une antenne d'émission 30.

Le récepteur 20 comporte une entrée 20a pour son raccordement à une antenne de réception 40 et une sortie 20b pour délivrer un signal, dit signal reconstitué, également de forme d'onde carrée.

L'émetteur 10 comporte un transformateur d'ondes 11 dont l'entrée est reliée à l'entrée 10a et qui transforme les signaux de forme d'onde carrée sur cette entrée en signaux de forme en dents de scie. L'amplitude de l'onde en dents de scie délivrée par le transformateur 11 est constante quelle que soit la fréquence de l'onde carrée sur son entrée.

Le transformateur 11 peut être constitué d'un générateur de signaux en dents de scie dont la fréquence est asservie sur la fréquence du signal présent sur son entrée.

Pour un fonctionnement correct du système de transmission, le temps de descente des dents de scie doit être aussi faible que possible.

La sortie du transformateur 11 est reliée à l'entrée d'un modulateur haute-fréquence 12 qui module par balayage en fréquence, à partir du signal en dents de scie délivré par le transformateur 11, une porteuse dont la fréquence centrale est égale à la fréquence d'émission F_{E} du système. L'excursion en fréquence du modulateur 12 est égale à 4F₀, F₀ étant une fréquence caractéristique du système de transmission de l'invention.

Le modulateur 12 est par exemple constitué d'un oscillateur commandé en tension.

Le récepteur 20 est quant à lui constitué d'un mélangeur 21 dont une première entrée est reliée à l'antenne 40 et l'autre entrée à un oscillateur local 22. La fréquence d'oscillation F_{R} de l'oscillateur 22 est sensiblement égale à la fréquence centrale d'émission F_{E} de la porteuse du modulateur 12.

La sortie du mélangeur 21 est reliée à l'entrée d'un filtre passe-bande 23 dont la fréquence de coupure basse est égale à la fréquence caractéristique F₀ et dont la fréquence de coupure haute est égale à 3F₀.

La sortie du filtre 23 est reliée à l'entrée d'un détecteur d'enveloppe 24 dont la sortie est reliée à la sortie 20b du récepteur 20.

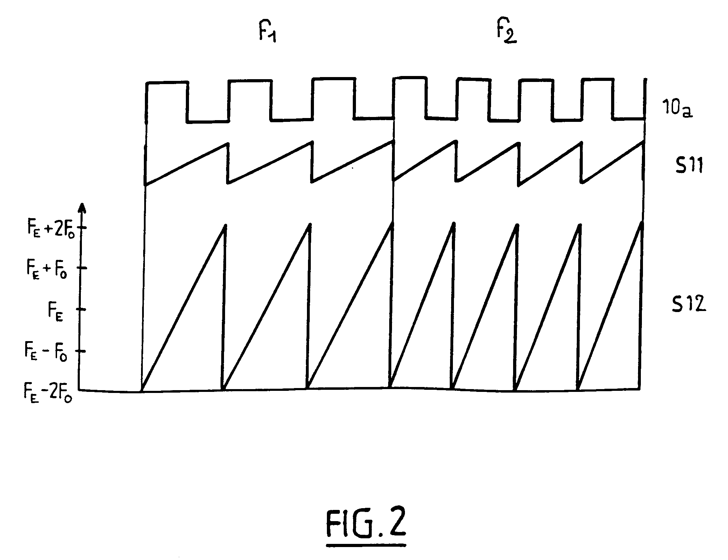

On a représenté à la Fig. 2 un diagramme des temps montrant, en fonction du temps, l'amplitude des signaux respectivement présents sur l'entrée 10a de l'émetteur 10 et sur la sortie du transformateur 11, et, également en fonction du temps, la fréquence du signal à la sortie du modulateur 12.

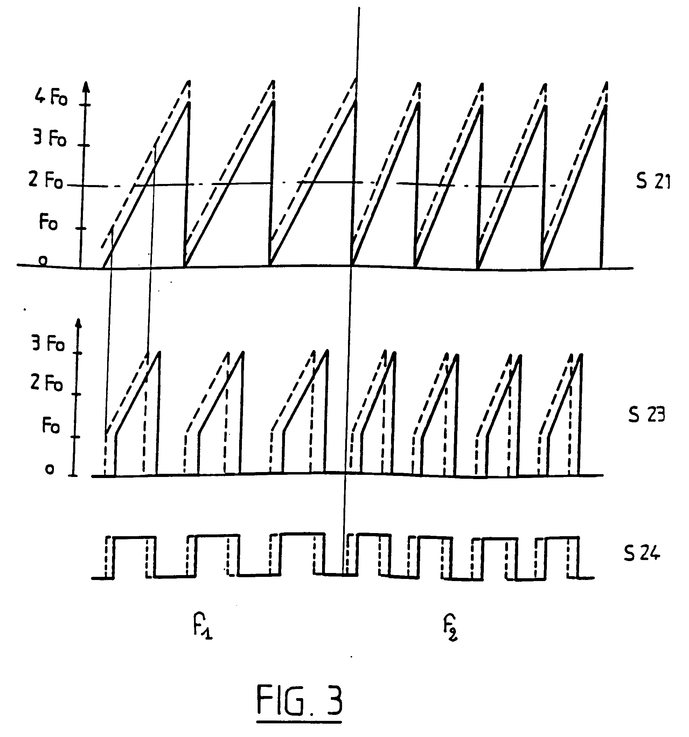

De même, on a représenté à la Fig. 3 un diagramme des temps montrant, en fonction du temps, la fréquence des signaux présents à la sortie du mélangeur 21, à la sortie du filtre 23, et , également en fonction du temps, l'amplitude du signal présent à la sortie du détecteur 24.

Ces diagrammes des temps ont été construits pour des signaux d'entrée en 10a ayant respectivement des fréquences f1 et f2. En fait, les signaux sur l'entrée 10a peuvent avoir une fréquence fixe quelconque ou une fréquence qui évolue dans le temps soit discrètement, soit de manière continue.

En S11 (Fig. 2), on a représenté les signaux en dents de scie résultant de la transformation effectuée par le transformateur 11 des signaux de forme d'onde carrée présente sur l'entrée 10a. En S12, on voit, dans un diagramme fréquence-temps, le signal à la sortie du modulateur 12. On notera que l'excursion en fréquence est de 4F₀ autour de la fréquence centrale d'émission F_{E}.

C'est le signal S12 présent sur la sortie du modulateur 12 qui attaque l'antenne d'émission 30.

Le signal reçu par l'antenne de réception 40 est fourni à la première entrée du mélangeur 21 dont l'autre entrée reçoit le signal issu de l'oscillateur 22. A la sortie du mélangeur 21 (représenté en un diagramme fréquence-temps à la Fig. 3), on obtient le signal S21 qui a une excursion en fréquence de 4F₀ autour d'une fréquence qui est égale à la différence de la fréquence centrale d'émission F_{E} et de la fréquence de réception F_{R} de l'oscillateur 22.

Pour faciliter la compréhension du procédé, on a choisi, sur la Fig. 3, une différence F_{E} - F_{R} égale à 2F₀.

Après passage dans le filtre 23, seules les fréquences dans la bande passante comprise entre la fréquence basse F₀ et la fréquence haute 3F₀ du filtre 23 sont présentes dans le signal S23. Après détection en 24, on obtient le signal S24 qui est de forme d'onde carrée dont une première partie, sur la Fig. 3, a une fréquence f1 et la seconde partie une fréquence f2, fréquences correspondant aux fréquences des signaux présents sur l'entrée 10a de l'émetteur 10.

Une dérive de la fréquence d'oscillation F_{R} de l'oscillateur 22 par rapport à la fréquence centrale d'émission F_{E} entraîne une dérive de la fréquence centrale de la bande de fréquences reçues (voir pointillés sur la Fig. 3). On peut constater que cette dérive n'entraîne qu'une dérive dans le temps du signal S23 et, par conséquent, un déphasage du signal S24.

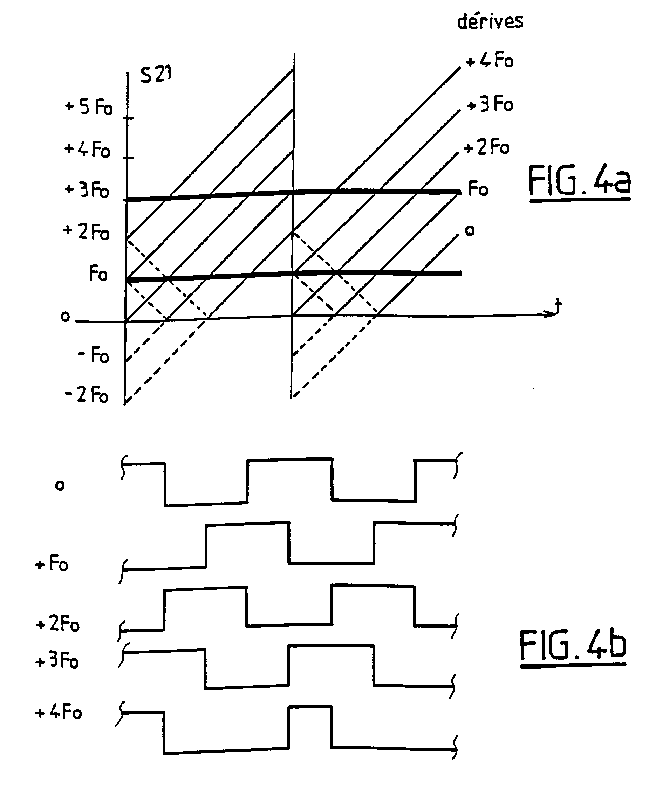

A la Fig. 4a, on a représenté le signal S21 dans des diagrammes fréquences reçues en fonction du temps correspondant respectivement à cinq valeurs de dérives en fréquences de la fréquence F_{R} par rapport à la fréquence centrale d'émission F_{E}. Le signal reçu a une excursion de 4F₀ autour de la fréquence F_{E}. Les dérives sont respectivement égales à 0, F₀, 2F₀, 3F₀ et 4F₀. Pour la dérive égale à 0, le signal S21 varie entre -2F₀ et +2F₀; pour celle de F₀, il varie entre -F₀ et +3F₀, pour celle de 2F₀, il varie entre 0 et +4F₀, etc. Du fait que des ondes ayant des fréquences négatives sont en réalité des ondes ayant des fréquences positives mais en opposition de phase, et que la phase n'intervient pas dans le fonctionnement du système de l'invention, les courbes de dérives égales à 0 et F₀ subissent un changement du signe de leur pente à leur point de croisement avec l'axe des temps (voir pointillés).

On a représenté la bande passante de filtrage par une zone comprise entre deux traits forts qui représentent respectivement la fréquence basse F₀ et la fréquence haute 3F₀ du filtre 23.

La Fig. 4b est tracée en correspondance avec la Fig. 4a et représente le signal S24 pour chaque dérive de la Fig. 4a. On constate que pour des dérives de fréquences inférieures ou égales à 3F₀, les signaux à la sortie du détecteur 24 sont de forme d'onde carrée et ne le sont pas pour des dérives supérieures.

On pourrait montrer qu'il en est de même pour des dérives inférieures à -3F₀.

Le procédé de l'invention est donc limité à des dérives de ± 3F₀.

L'explication qui vient d'être donnée indique des valeurs entières de dérives égales respectivement à F₀, 2F₀, 3F₀ et 4F₀. On comprendra que le procédé de transmission fonctionne correctement pour des valeurs de dérive quelconques dès lors qu'on reste entre les valeurs ± 3F₀.

Avec une fréquence d'émission de 2,45 GHz, on a pu transmettre des signaux numériques à un débit d'une dizaine de Kbits/s dans une bande de 30 MHz tout en acceptant des dérives d'oscillateurs en émission comme en réception de l'ordre de 3.10⁻³ dans la gamme de température.

On a trouvé que la sensibilité aux trajets de propagation multiples, qui sont la cause d'évanouissements sélectifs, en particulier lors de transmissions micro-ondes, ainsi qu'aux brouillages éventuels, peut être diminuée en provoquant, par une commande appropriée en 22a, une dérive lente de la fréquence de l'oscillateur 22.

L'amplitude maximale acceptée de la dérive relative des oscillateurs 12 et 22 doit être prise en compte pour la détermination de cette dérive lente de l'oscillateur 22.

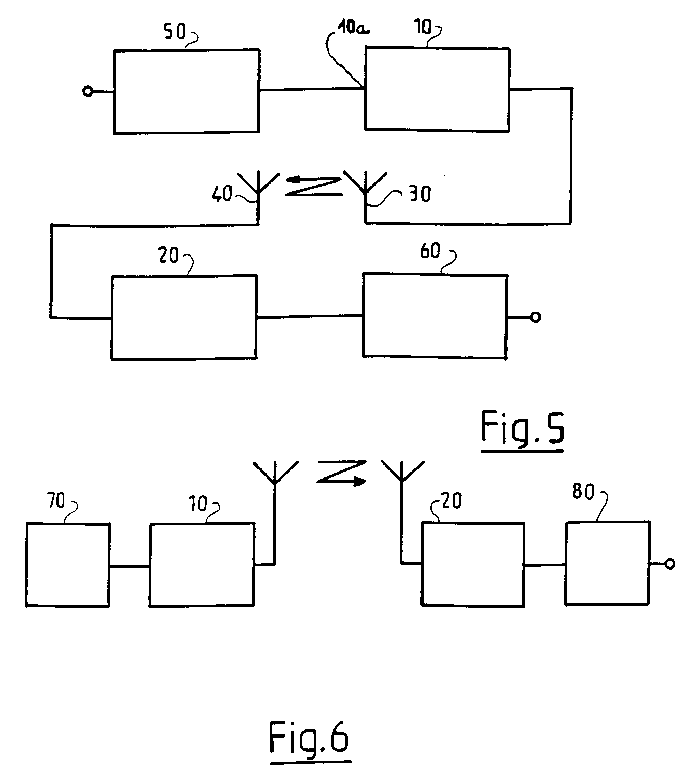

On a représenté à la Fig. 5 un système de transmission de signaux numériques qui comporte un système de transmission de signaux de forme d'onde carrée selon l'invention.

Ce système comprend un émetteur 10 et un récepteur 20 appartenant à un système de transmission tel que celui qui vient d'être décrit en relation avec la Fig. 1.

Il comporte en outre un modulateur 50 dont l'entrée est destinée à recevoir des signaux porteurs d'informations et dont la sortie est reliée à l'entrée 10a. Le modulateur 50 module en fréquence les signaux présents sur son entrée.

Il comporte encore un démodulateur 60 qui effectue le traitement inverse du modulateur 50.

Les signaux porteurs d'informations peuvent être des signaux analogiques. Dans ce cas, la fréquence des signaux en sortie du modulateur 50 varie continûment autour d'une fréquence centrale en fonction de l'amplitude des signaux d'informations.

Les signaux porteurs d'informations peuvent être également des signaux numériques. Dans ce cas, le modulateur 50 est avantageusement un modulateur par déplacement de fréquence, dit également modulateur FSK qui module, à partir des signaux numériques sur son entrée, une porteuse intermédiaire de manière qu'à un niveau zéro sur son entrée, il délivre un signal de forme d'onde carrée à une première fréquence f1 et, qu'à un niveau un, il délivre un signal également de forme d'onde carrée mais à une seconde fréquence f2.

Le modulateur 50 peut être par exemple constitué d'un circuit intégré du type NE5080 commercialisé par "SIGNETICS".

Le démodulateur 60 est un démodulateur FSK qui délivre sur sa sortie un niveau zéro lorsqu'est présent sur son entrée, un signal de forme d'onde carrée de fréquence f1 et un niveau un lorsque c'est un signal de forme d'onde carrée de fréquence f2 qui est présent sur son entrée.

Le démodulateur 60 peut être par exemple constitué d'un circuit intégré du type NE5081 commercialisé par "SIGNETICS".

La Fig. 6 représente une autre application d'un système de transmission selon l'invention. Elle constitue un système de type barrière d'ondes hertziennes qui comprend au moins un émetteur 10 et au moins un récepteur 20 constituant un système de transmission tel que celui qui est décrit en relation avec la Fig. 1. Il comporte en outre un générateur d'un signal de forme d'onde carrée 70 dont la sortie est reliée à l'entrée de l'émetteur 10 et un circuit d'analyse 80 dont l'entrée est reliée à la sortie du récepteur 20.

Le générateur 70 engendre un signal de fréquence fixe et le circuit 80 analyse la sortie du récepteur 20. Lorsque rien ne vient perturber le trajet des ondes hertziennes entre l'émetteur 10 et le récepteur 20, le circuit 60 détecte un signal qui est l'image du signal engendré par le générateur 70. Par contre lorsqu'il se présente un obstacle, le circuit 80 ne détecte plus aucun signal.

En réalité, on a pu constater que, selon l'obstacle considéré, le signal en sortie du récepteur 20 peut être plus ou moins atténué.

Les avantages d'un système de transmission de signaux de forme d'onde carrée selon l'invention résultent essentiellement du fait que le ou les récepteurs n'ont pas besoin d'être parfaitement accordés à l'émetteur ou aux émetteurs. En effet, comme on l'a montré, une dérive de cet accord n'entraîne pas de perte d'informations.

Ainsi, dans les applications envisagées ici, un système selon l'invention ne nécessite pas de boucles de contrôle de fréquence et/ou de phase pour parfaire cet accord.

Le procédé de l'invention s'adapte bien aux bandes de fréquence dans lesquelles on prévoit la mise en oeuvre de systèmes de transmission à étalement de spectre, permettant un accès multiple de codage. Dans ces bandes de fréquence, il est prévu de spécifier des densités spectrales de puissance d'émission.

En prévoyant des dispositifs qui associent les fonctions d'émission et de réception, il est possible de réaliser des liaisons en half-duplex ou bilatérales. L'émetteur et le récepteur de chaque dispositif fonctionnent alors en alternat. On notera qu'un seul oscillateur peut remplir alternativement les fonctions de l'oscillateur 13 et de l'oscillateur 22 décrites ci-dessus.

Il est également possible de prévoir plusieurs liaisons dans un même environnement. Pour améliorer la protection radioélectrique, on peut affecter à chaque liaison un couple de fréquences issues de la modulation FSK, f1 et f2, différent des autres liaisons du même type.

## Revendications

**1)** Procédé de transmission de signaux électriques, lesdits signaux ayant une forme d'onde carrée, caractérisé en ce qu'il consiste à:
1) a l'émission,
a) transformer lesdits signaux de forme d'onde carrée en signaux en dents de scie d'amplitude constante et de même fréquence que lesdits signaux de forme d'onde carrée,
b) moduler en fréquence, par lesdits signaux en dents de scie, une porteuse, dite porteuse d'émission,
c) émettre par voie hertzienne lesdits signaux modulés en fréquence, et
2) à la réception,
a) mélanger les signaux reçus à une onde de sensiblement même fréquence que la porteuse d'émission afin d'obtenir des signaux modulés en fréquence compris dans une bande de fréquences de réception,
b) détecter, parmi lesdits signaux dans ladite bande de réception, ceux dont la fréquence se trouve à l'intérieur d'une bande, dit de filtrage, de largeur deux fois plus faible que ladite bande de réception et centrée sur ladite bande de réception, afin de produire un signal de détection à un premier niveau lors de ladite détection et à un second niveau en l'absence de détection afin de fournir des signaux reconstitués de forme d'onde carrée.

**2)** Procédé selon la revendication 1, caractérisé en ce qu'à l'émission, l'excursion en fréquence de la modulation en fréquence de la porteuse d'émission est égale à 4F₀ et en ce qu'à la réception, la bande de filtrage comprise entre une fréquence basse F₀ et une fréquence haute 3F₀, F₀ étant une fréquence caractéristique du procédé de transmission.

**3)** Procédé selon l'une des revendications précédentes, caractérisé en ce que l'on mélange les signaux reçus à une onde dont la fréquence varie lentement autour d'une fréquence sensiblement égale à celle de la porteuse d'émission.

**4)** Procédé de transmission de signaux d'informations, caractérisé en ce qu'il consiste à:
a) moduler en fréquence une porteuse à partir desdits signaux d'informations afin de fournir des signaux de forme d'onde carrée dont la fréquence est en relation avec les informations portées par lesdits signaux,
b) appliquer auxdits signaux de forme d'onde carrée ainsi générés, un procédé de transmission selon une des revendications 1 à 3,
c) démoduler les signaux reconstitués à l'étape de réception dudit procédé afin de recouvrir lesdits signaux d'informations.

**5)** Procédé de transmission selon la revendication 4, caractérisé en ce que lesdits signaux d'informations sont des signaux numériques et en ce que la modulation de la porteuse de codage est du type à déplacement de fréquence FSK afin de produire des signaux de modulation à une première fréquence pour les bits à zéro et à une seconde fréquence pour les bits à un desdits signaux numériques, le décodage consistant en une démodulation en FSK inverse.

**6)** Système de transmission par voie hertzienne de signaux électriques de forme d'onde carrée pour la mise en oeuvre du procédé selon une des revendications précédentes, comprenant au moins un émetteur et au moins un récepteur, caractérisé en ce que ledit émetteur comprend:
un transformateur d'ondes (11) dont l'entrée peut recevoir lesdits signaux de forme d'onde carrée pour les transformer en signaux en dents de scie,
un modulateur (12) qui module en fréquence sur une porteuse les signaux issus du transformateur (11), la sortie du modulateur (12) attaquant une antenne d'émission (30),
et en ce que ledit récepteur comprend:
un mélangeur (21) dont une première entrée est reliée à une antenne de réception (40) et une autre entrée à un oscillateur local (22),
un filtre passe-bande (23) déterminant ladite bande dite de filtrage,
un détecteur d'enveloppe (24).

**7)** Système de transmission de signaux d'informations par voie hertzienne pour la mise en oeuvre du procédé selon la revendication 4, comprenant un système de transmission selon la revendication 6, caractérisé en ce que ledit émetteur comprend en outre:
un modulateur (50) dont l'entrée est destinée à recevoir lesdits signaux d'informations et dont la sortie est reliée à l'entrée du transformateur (12), ledit modulateur (50) étant du type à modulation de fréquence et étant prévu pour fournir des signaux de forme d'onde carrée dont la fréquence est en relation avec les informations portées par lesdits signaux d'informations et,
un démodulateur (60) du type à déplacement de fréquence dont l'entrée est reliée à la sortie du détecteur d'enveloppe (24) pour recouvrir lesdits signaux d'informations.

**8)** Système de transmission selon la revendication 7, dans lequel lesdits signaux d'informations sont des signaux numériques, système plus spécialement adapté à la mise en oeuvre d'un procédé selon la revendication 5, caractérisé en ce que ledit émetteur comprend en outre:
un modulateur (50) dont l'entrée est destinée à recevoir lesdits signaux numériques en bande de base et dont la sortie est reliée à l'entrée du transformateur (12), ledit modulateur (50) étant du type à modulation par déplacement de fréquence qui, à un niveau zéro sur son entrée, délivre un signal de forme d'onde carrée à une première fréquence f1 et, à un niveau un, délivre un signal de forme d'onde carrée à une seconde fréquence f2, et,
un démodulateur (60) du type à déplacement de fréquence dont l'entrée est reliée à la sortie du détecteur d'enveloppe (24).

**9)** Système du type barrière d'ondes hertziennes, comprenant au moins un émetteur (10) et au moins un récepteur (20), caractérisé en ce qu'il comprend:
a)un système de transmission de signaux carrée selon la revendication 6 dont l'émetteur (10) est piloté par un générateur (70) de signaux de forme d'onde carrée à fréquence fixe,
b) un circuit d'analyse (80) qui détecte la présence ou l'absence ou l'affaiblissement des signaux reconstitués par ledit récepteur (20).
